# EUROPÄISCHE PATENTSCHRIFT

(11) **EP 2 066 538 B1**
(45) Veröffentlichungstag und Bekanntmachung des Hinweises auf die Patenterteilung: **26.10.2011**
(21) Anmeldenummer: 07802472.6
(22) Anmeldetag: 02.08.2007
(51) Int. Cl.: B60S 3/00, B60S 3/06

(54) **WASCHPORTAL UND VERFAHREN ZUR MONTAGE EINES WASCHPORTALS**
ROLLOVER WASH UNIT AND METHOD FOR MOUNTING A ROLLOVER WASH UNIT
PORTIQUE DE LAVAGE ET PROCÉDÉ DE MONTAGE D'UN PORTIQUE DE LAVAGE

(30) Priorität: 11.09.2006 DE 102006043199
(43) Veröffentlichungstag der Anmeldung: 10.06.2009
(73) Patentinhaber: WashTec Holding GmbH, 86153 Augsburg (DE)
(72) Erfinder: WIMMER, Georg, 86444 Affing (DE); HIRSCHMANN, Rüdiger, 86157 Augsburg (DE); ROHNE, Henning, 86850 Fischach (DE)
(74) Vertreter: Charrier, Rapp & Liebau
(86) Internationale Anmeldenummer: PCT/EP2007/058012
(87) Internationale Veröffentlichungsnummer: WO 2008/031674

(56) Entgegenhaltungen:
- DE-A1- 10 208 927
- DE-A1-102004 053 357
- FR-A3- 2 876 126

## Beschreibung

Die Erfindung betrifft ein Waschportal für eine Fahrzeugwaschanlage nach dem Oberbegriff des Anspruchs 1 sowie ein Verfahren zur Montage eines Waschportals nach dem Oberbegriff des Anspruchs 8.

Üblicherweise werden Waschportale für Fahrzeugwaschanlagen von den Fahrzeugwaschanlagenherstellern in bereits fertig montiertem Zustand an die Fahrzeugwaschanlagenbetreiber ausgeliefert. Dadurch kann die Fahrzeugwaschanlage dort möglichst schnell in Betrieb genommen werden. Dieser Vorteil der möglichst schnellen Inbetriebnahme des Waschportals beim Fahrzeugwaschanlagenbetreiber geht jedoch mit dem Nachteil einher, dass die Waschportale aufgrund der großen Breite, Höhe und Gewichts des Waschportals nur mit Speziallastfahrzeugen zu transportieren sind. Zudem bleibt der Raum zwischen den Seitenteilen und der Portaltraverse aufgrund der Portalform des Waschportals beim Transport weitgehend ungenutzt. Bei großen Waschportalen, beispielsweise für Kombifahrzeuge, kommt hinzu, dass das zusammengebaute Waschportal die zulässigen Abmessungen, insbesondere die zulässige Höhe für einen Transport auf Straße oder Schiene, überschreitet. Deshalb werden bei bekannten Fahrzeugwaschanlagen die Fahrfüße der Seitenteile des Waschportals vor dem Transport demontiert, was mit beträchtlichem Aufwand beim Montieren an der Fahrzeugwaschanlage vor Ort einhergeht.

Ebenfalls bereitet die Größe der fertig montierten Waschportale beim Einbau in Waschhallen oft Probleme, da die Einfahrtstore der Waschhallen häufig zu klein für die vollständig montierten Waschportale sind. Deshalb müssen die Fahrfüße der Waschportale und Teile der Seitenwände vor dem Aufstellen in der Waschhalle demontiert werden, um das Waschportal überhaupt in die Waschhalle einstellen zu können.

Da die fertige montierten Waschportale nicht nur große Abmessungen aufweisen, sondern auch sehr schwer sind, werden zum Abladen und Aufstellen vor Ort eigene Schwerlastkräne benötigt, die selber einen großen Raumbedarf und entsprechend ausreichend befestigten Untergrund zum Abladen des Waschportals und Aufstellen vor Ort benötigen.

Ein Beispiel eines derartigen Waschportals offenbart die DE 10 2004 053 357 A1 in Form einer Vorrichtung zur Außenwäsche von Kraftfahrzeugen. Bei der dortigen Vorrichtung ist ein Maschinengestell in Form eines PKW-Anhängers gezeigt, an dem mindestens ein Portalmast zwischen einer im wesentlichen horizontalen und einer im wesentlichen vertikalen Lage verschwenkbar angeordnet ist. Bei zwei Portalmasten ist der Abstand der Fußpunkte der Portalmasten zueinander soweit veränderbar, dass die lichte Weite zwischen den Portalmasten in auseinander gefahrenem Zustand größer als die tatsächliche Breite des betreffenden Fahrzeugs, z.B. eines LKW, ist, während die Breite der Waschanlage über alles im zusammengefahrenen Zustand nicht größer als die zulässige Breite eines für den öffentlichen Straßenverkehr ohne Ausnahmegenehmigung zulässigen Anhängers, vorzugsweise PKW-Anhängers, ist. Um den Abstand der Portalmasten zueinander verändern zu können, sieht die Vorrichtung vor, dass der die Portalmasten verbindende Portalbogen in der Mitte zusammengeklappt werden kann. Um einen platzsparenden Transport zu ermöglichen, ist der Portalbogen selbst an oberen Enden der Portalsäulen drehbar angeordnet, welche ihrerseits um 180° zu den unteren Teilen der Portalmasten drehbar sind. Diese Vorrichtung weist den Nachteil auf, dass zum Auf- bzw. Abbauen mehrere Klappvorgänge in unterschiedliche Richtungen notwendig sind. Durch die zweiteiligen Portalmasten und den zweiteiligen Portalbogen verringert sich die Stabilität der gesamten Konstruktion. Auch sind die Vielzahl von notwendigen Scharnieren in der Herstellung und Montage teuer und aufwändig.

Aufgabe der vorliegenden Erfindung ist es deshalb, ein Waschportal und ein Verfahren zur Montage eines Waschportals bereitzustellen, welche die oben genannten Nachteile überwinden und einen effizienten und Platz sparenden Transport sowie eine effiziente, einfache und schnelle Montage des Waschportals vor Ort ermöglichen.

Diese Aufgabe wird durch ein Waschportal für eine Fahrzeugwaschanlage mit den Merkmalen des Anspruchs 1 und ein Verfahren zur Montage eines Waschportals mit den Merkmalen des Anspruchs 8 gelöst. Vorteilhafte Ausgestaltungen und zweckmäßige Weiterbildungen der Erfindung sind in den Unteransprüchen angegeben.

Das eingangs genannte Waschportal zeichnet sich dadurch aus, dass die Traverse und die Seitenteile zur Montage des Waschportals über mindestens eine Gelenkverbindung mit einer im wesentlichen senkrecht zu den Seitenteilen und längs der Traverse verlaufenden Drehachse drehbar miteinander verbunden sind. Durch diese Gelenkverbindung, die auch erst unmittelbar vor der Montage des Waschportals vor Ort hergestellt werden kann, können die Traverse und die Seitenteile vor der Montage getrennt transportiert und getrennt in eine Fahrzeugwaschhalle eingebracht werden. Somit werden sowohl für den Transport als auch zum Abladen und Aufstellen nicht mehr unbedingt Speziallastfahrzeuge bzw. -kräne benötigt, wobei diese natürlich immer noch dazu verwendet werden können. Werden die Traverse und die Seitenteile zur Montage des Waschportals dann entsprechend am Montageort zueinander positioniert und ausgerichtet, wonach die Gelenkverbindung mit einer im wesentlichen senkrecht zu den Seitenteilen und längs der Traverse verlaufenden Drehachse hergestellt wird, sodass die Seitenteile relativ zur Traverse gedreht werden können, wird zum Abladen der Teile vom Liefertransportfahrzeug lediglich ein Hubgabelstapler benötigt. Dieser kann dann auch die Traverse von der Montageposition anheben, wobei die Seitenteile in die für die Endmontage des Waschportals notwendige Endposition bewegt werden. Werden die Traverse und die Seitenteile dann anschließend drehfest miteinander verbunden, ist der Montagevorgang auf einfache und schnelle Weise abgeschlossen. Durch die Erfindung kann somit Transportraum eingespart bzw. effizienter genutzt werden, wobei gleichzeitig ein schnelles und einfaches Montieren des Waschportals, auch in kleinen Waschhallen oder bei anderen beengten Raumverhältnissen, ermöglicht wird.

Bevorzugt wird die Gelenkverbindung in Form eines Scharniers ausgebildet. So können in einer montagetechnisch günstigen Ausführung zur Verbindung der Seitenteile und der Traverse dann einfach Scharnierachse oder -wellen durch die Scharnierbuchsen gesteckt und miteinander verschraubt werden. Eine andere vorteilhafte Ausführung der Gelenkverbindung sieht vor, dass an der Traverse oder den Seitenteilen Drehzapfen angeordnet sind, die in entsprechende Zapfenaufnahmen am jeweils anderen Teil eingreifen.

Um die Traverse fest mit den Seitenteilen verbinden zu können, ist in einer weiteren vorteilhaften Ausgestaltung eine Arretiervorrichtung an der Traverse und den Seitenteilen vorgesehen. Hierdurch wird ein schneller und gegen unerwünschtes Lösen der Verbindung im fertig montierten Zustand des Waschportals verhindert. Die Arretiervorrichtung kann einen Schnellverschluss aufweisen, beispielsweise in Form eines Bajonettverschlusses oder eines Rastverschlusses.

Weisen die Fahrfüße des Waschportals Rollmittel auf, so kann hierdurch das noch drehbar über die Gelenkverbindung verbundene Waschportal besonders einfach von der Montageposition in die Endposition bewegt werden.

Weitere Besonderheiten und Vorzüge der Erfindung ergeben sich aus der folgenden Beschreibung eines bevorzugten Ausführungsbeispiels anhand der Zeichnungen. Es zeigen:
- **Fig. 1**: eine schematische Seitenansicht von Seitenteilen eines Waschportals in einer Montageposition;
- **Fig. 2**: die Seitenansicht aus Fig.1, wie eine Traverse auf die Seitenteile gehoben wird;
- **Fig. 3**: die Seitenansicht aus Fig. 1, wobei die Seitenteilen und Traverse drehbar miteinander verbundenen sind, unmittelbar vor dem Anheben der Traverse;
- **Fig. 4**: eine schematische Draufsicht auf das Waschportal aus Fig. 3;
- **Fig. 5**: die Seitenansicht des Waschportals aus Fig. 3 während des Anhebens der Traverse;
- **Fig. 6**: die Seitenansicht des Waschportals aus Fig. 3 während des Anhebens der Traverse kurz vor der einer Endposition;
- **Fig. 7**: eine schematische Seitenansicht des Waschportals aus Fig. 1 in der Endposition.

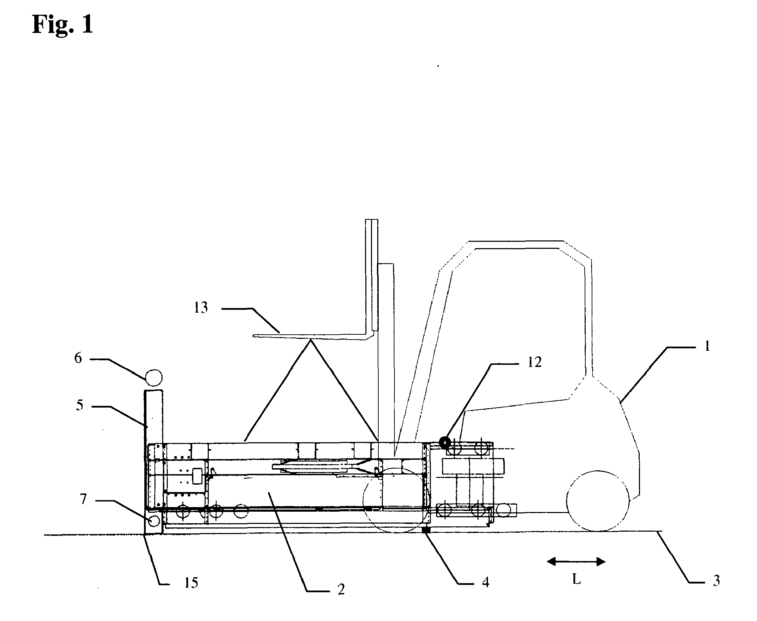

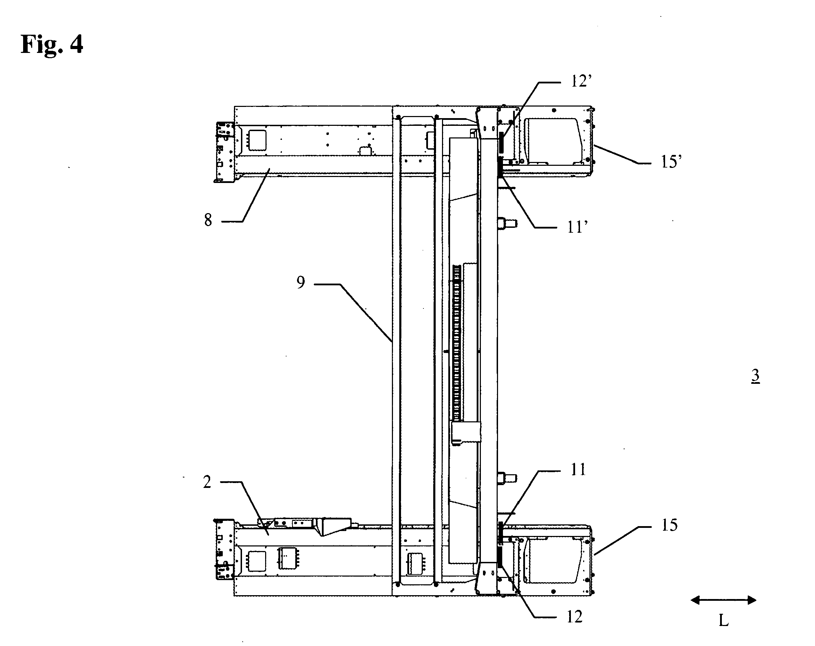

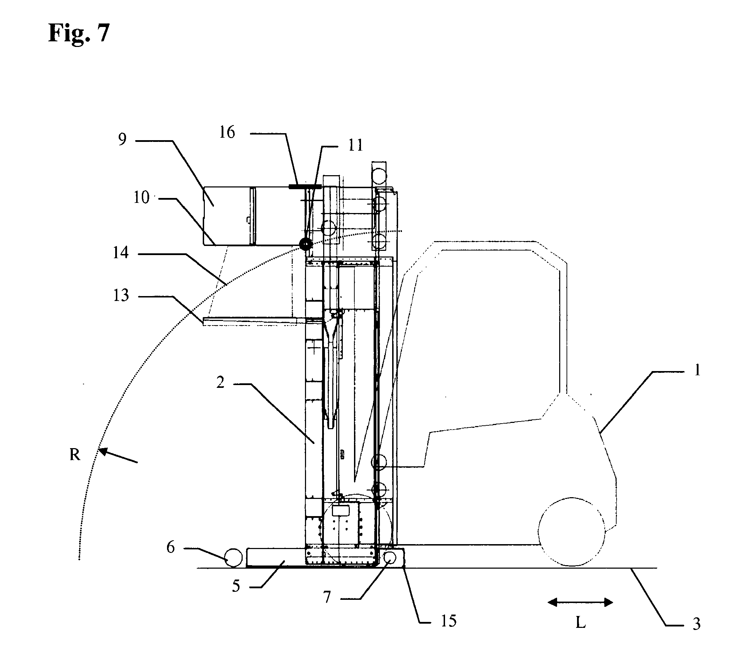

Die Figuren 1 bis 7 zeigen die Montage eines Waschportals in einer Waschhalle von der Anlieferung der einzelnen Teile bis zum fertig montierten Waschportal. In Figur 1 transportiert ein herkömmlicher Hubgabelstapler 1 ein linkes Seitenelement 2 eines Waschportals in die Waschhalle und legt es dort auf dem Waschhallenboden 3 und einem Stützbalken 4 ab. Das Seitenelement 2 befindet sich also in einer um 90° zu seiner Endposition (siehe Fig. 7) gedrehten Position. Am Seitenelement 2 ist am in Fig. 1 linken Ende ein Fahrfuß 5 fest angebracht, welcher Rollen 6, 7 aufweist, um das Waschportal in seinem fertig montiertem Zustand auf einer in den Figuren nicht zeichnerisch dargestellten Schienenanordnung in Längs- bzw. Waschrichtung L fahren zu können. Das linke Seitenelement 2 wird so auf dem Boden 3 positioniert, dass die Rollen 6, 7 beim Aufstellen des Waschportals möglichst leicht mit einer linken Schiene der Schienenanordnung in Eingriff gelangen. Nachdem das linke Seitenelement 2 auf dem Boden 3 abgelegt wurde, wird in entsprechender Weise ein rechtes, nur in Fig. 4 dargestelltes Seitenelement 8 auf dem Boden 3 bzw. dem Stützbalken 4 abgelegt und in Längsrichtung L parallel zum linken Seitenelement 2 ausgerichtet. Der Abstand des rechten Seitenelements 8 vom linken Seitenelement 2 wird so gewählt, dass auch das rechte Seitenelement 8 in eine parallel zur linken Schiene verlaufende rechte Schiene der Schienenanordnung eingreifen kann, wenn das Waschportal aufgestellt und fertig montiert wird. Waschbürsten und weitere Behandlungsaggregate werden erst dann an dem Waschportal angebracht, wenn es fertig montiert und in der Endposition ist, um sie nicht zu beschädigen.

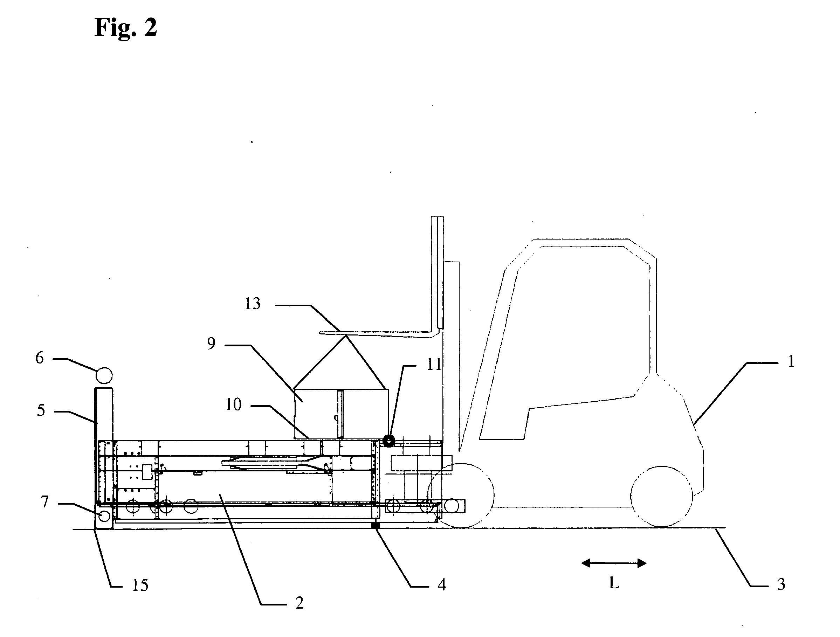

Wenn die beiden Seitenelement 2, 8 ausgerichtet sind, wird eine Traverse 9 mit einer Unterseite 10 auf die Seitenteile 2 und 8 abgelegt, wobei die Traverse 9 im wesentlichen senkrecht zur Längsrichtung L und den Längsseiten der Seitenelemente 2, 8 ausgerichtet wird, wie in Fig. 2 und 4 leicht erkennbar. Die Unterseite 10 ist hierbei die Seite der Traverse, die in der in Fig. 7 gezeigten Endposition des Waschportals zum Boden 3 hin weißt. Zusätzlich muss darauf geachtet werden, dass an der in Fig. 2 unteren rechten Kante der Traverse 9 angebrachte, beidseitig offene Scharnierbuchsen 11, 11' mit entsprechenden Scharnierbuchsen 12, 12' an dem linken und rechten Seitenelement 2, 8 fluchtend ausgerichtet werden.

Um bei der Montage eine optimale Ausrichtung zwischen den Seitenteilen 2, 8 und der Traverse 9 zu erreichen, sind in den Zeichnungen nicht dargestellte Ausrichtelemente in Form von Zapfen mit entsprechenden Ausnehmungen an der Unterseite 10 der Traverse 9 und den die Unterseite 10 berührenden Seitenteilen 2, 8 vorgesehen, die beim Auflegen der Traverse 9 auf die Seitenteile 2, 8 ineinander greifen. Zusätzlich verhindern die Ausrichtelemente ein Verschieben der Traverse 9 in seitlicher Richtung in der Montageposition.

Zur Herstellung einer Gelenkverbindung zur drehbaren Verbindung der Seitenteile 2, 8 relativ zur Traverse 9 werden anschließend die Scharnierbuchsen 11, 12 über jeweils eine Scharnierwelle für das linke bzw. rechte Seitenelement 2, 8 drehbar verbunden, wobei die Scharnierwellen an ihren über die Scharnierbuchsen nach außen ragenden Enden mit Schraubenmuttern gegen das Herausfallen gesichert werden. Die Drehbarkeit der Scharnier-Gelenkverbindung wird hierdurch nicht beeinträchtigt.

In einer Alternativen, zeichnerisch nicht dargestellten Ausführung weist die Gelenkverbindung eine fest an der in Fig. 2 rechten Kante der Unterseite 10 der Traverse 9 angebrachte offene Scharnierbuchse auf: Die Scharnierbuchse wird durch ein Rohr gebildet, welches sich über die gesamte Länge der Traverse 9 zwischen den Seitenteilen 2, 8 erstreckt. Durch das Rohr wird dann eine Gelenkwelle gesteckt, die an Ihren beiden über das Rohr ragenden Enden an den Seitenteilen 2 bzw. 8 fest angebracht wird. Bei dieser Ausführung reicht also bereits eine Gelenkverbindung aus, um die Seitenteile 2, 8 relativ gegenüber der Traverse 9 drehen zu können. Anstelle eines durchgehenden Rohres können bei dieser Ausführung auch mehrere kurze, über die Länge der Traverse 9 angebrachte Rohrstücke verwendet werden, durch welche die Gelenkwelle reicht.

Zur Herstellung einer Gelenkverbindung zur drehbaren Verbindung der Seitenteile 2, 8 relativ zur Traverse 9 werden anschließend die Scharnierbuchsen 11, 12 über jeweils eine Scharnierwelle für das linke bzw. rechte Seitenelement 2, 8 drehbar verbunden, wobei die Scharnierwellen an ihren über die Scharnierbuchsen nach außen ragenden Enden mit Schraubenmuttern gegen das Herausfallen gesichert werden. Die Drehbarkeit der Scharnier-Gelenkverbindung wird hierdurch nicht beeinträchtigt.

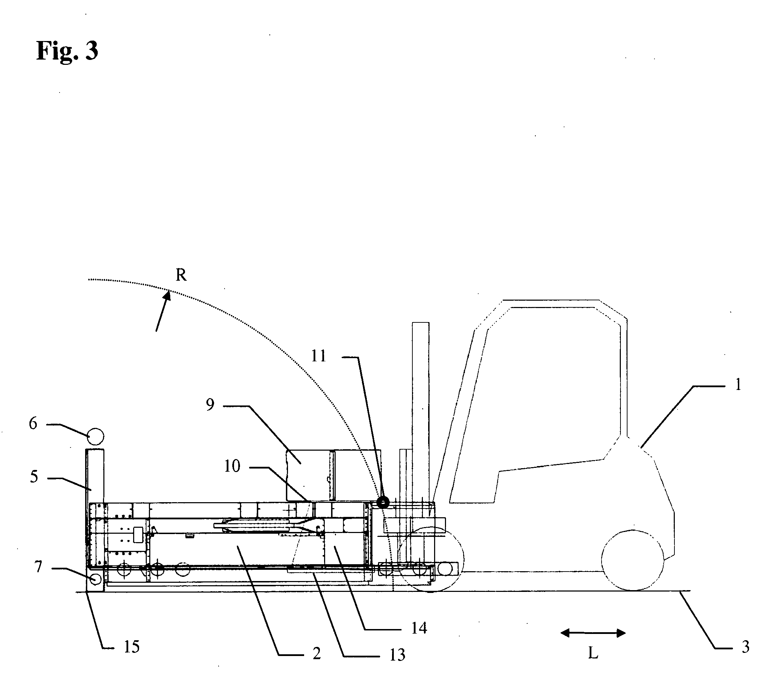

Nachdem die Gelenkverbindung zwischen der Traverse 9 und den Seitenteilen 2, 8 hergestellt wurde, fährt der Hubgabelstapler 1 mit seiner Hubgabel 13 und einem darauf angeordneten Abstandselement 14 unter die Traverse 9, wie in Fig. 3 gezeigt. Daraufhin hebt er vorsichtig die Hubgabel 13 mit der Traverse 9 an, wodurch die damit drehbar verbundenen Seitenteile 2, 8 von der in den Figuren 1 bis 4 gezeigten Montageposition in die in Fig. 7 gezeigte Endposition gekippt werden.

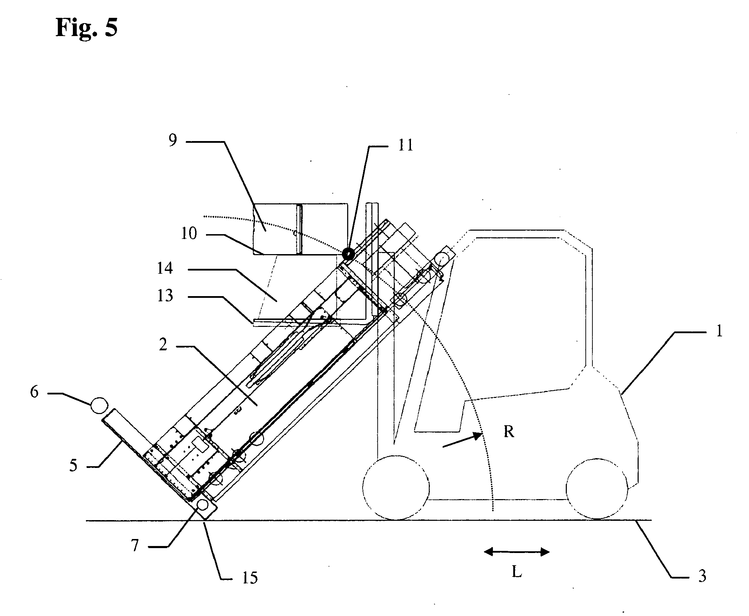

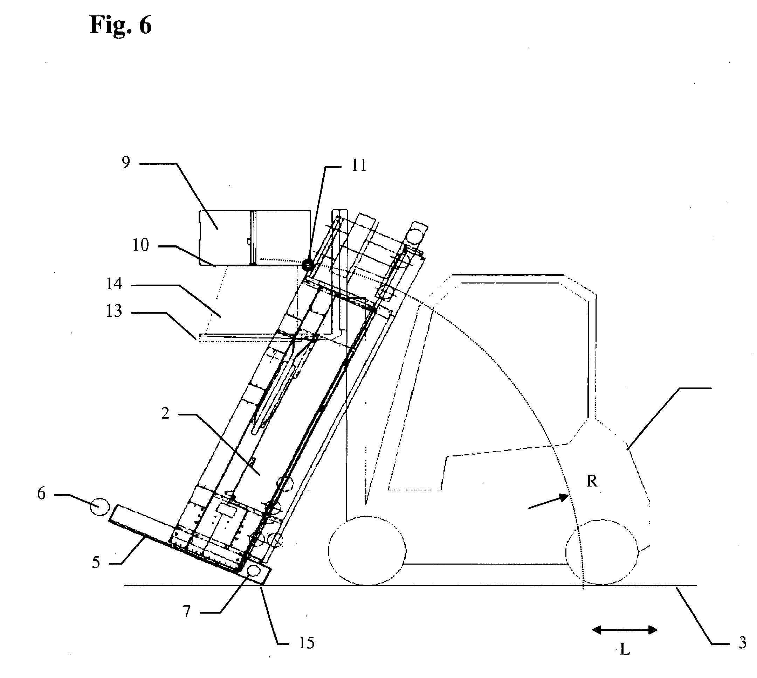

Wie aus den in Fig. 5 und 6 gezeigten Zwischenpositionen während des Anhebens der Traverse 9 hervorgeht, führen die Seitenteile 2, 8 hierbei eine Drehbewegung um eine auf dem Boden 3 abgestützte, in den Fig. 5 und 6 untere Kippkante 15, 15' der Fahrfüße 5, 5' der Seitenteile 2, 8 aus, wobei der Drehradius R der Scharnier-Gelenkverbindung 11, 12 um die Kippkanten 15, 15' in den Zeichnungen schematisch angedeutet ist. Um die Drehbewegung ausführen zu können, muss in dem zeichnerisch dargestellten Ausführungsbeispiel der Hubgabelstapler 1 entsprechend der Drehbewegung während des Anhebens der Hubgabel 13 langsam in Längsrichtung L nach links fahren, bis die Traverse 9 und die Seitenteile 2, 8 die in Fig. 7 dargestellte Endposition erreicht haben.

In einer zeichnerisch nicht dargestellten Ausführungsform der Erfindung sind an den Kippkanten 15, 15' als Rollen ausgebildete Rollmittel angebracht, so dass der Hubgabelstapler 1 während des Anhebens der Traverse 9 nicht in Vorwärtsrichtung fahren, sondern lediglich mit seiner Hubgabel 13 die Traverse 9 nach oben anheben muss. Die Fahrfüße 5, 5' der Seitenelemente 2, 9 rollen dann auf den Rollen der Kippkanten 15, 15' von der in Figur 3 gezeigten Stapler-fernen Position auf den Hubgabelstapler 1 zu, bis die Seitenteile 2, 8 in der in Figur 7 gezeigten Endposition angelangt sind. Anstelle von Rollen können auch andere geeignete Rollmittel verwendet werden, beispielsweise Räder, Wälzen etc.

Um das Waschportal fertig zu montieren, wird in der in Fig. 7 gezeigten Endposition des Waschportals noch die Traverse 9 fest mit den Seitenteilen 2, 8 verbunden, um eine Drehung der Traverse 9 relativ zu den Seitenteilen 2, 10 zu verhindern. Hierzu ist an den in Fig. 7 oben gezeigten Kanten der Traverse 9 und der Seitenteile 2, 8 eine Arretiervorrichtung 16 vorgesehen, mit der die Traverse 9 fest und schnell an den Seitenteilen 2, 8 befestigt werden kann. Die Arretiervorrichtung besteht hier aus an der Traverse 9 drehbar gelagerten Haken, die in entsprechende Ausnehmungen an den Seitenteilen 2, 8 eingreifen. Die Haken sind zudem mit einer Rastnase versehen, die in entsprechende Rastnuten der Ausnehmungen eingreifen und somit ein unerwünschtes Lösen der Arretierung verhindern. Alternativ können die Traverse 9 und die Seitenteile 2, 8 auch über Bajonettverbindungen, Schraubenverbindungen oder andere geeignete Verbindungselemente fest miteinander verbunden werden.

Um bei der Endmontage in der in Fig. 7 gezeigten Endposition eine optimale Ausrichtung zwischen den Seitenteilen 2, 8 und der Traverse 9 zu erreichen, sind an deren sich berührenden Flächen in den Zeichnungen nicht dargestellte Ausrichtelemente in Form von Zapfen mit entsprechenden Ausnehmungen vorgesehen, die in der in Fig. 7 gezeigte Endposition ineinander greifen.

In einer alternativen, zeichnerisch nicht dargestellten Ausführung kann die Gelenkverbindung auch an der Oberseite der Traverse 9 angebracht werden. Die entsprechende Anlenkung der Gelenkverbindung an den Seitenteilen 2, 8 erfolgt dann am Berührungspunkt der in Fig. 7 oberen rechten Kante der Traverse 9 an den Seitenteilen 2, 8. Um das Anheben zu ennöglichen, werden die Seitenteile mit der in Fig. 1 nach oben weisenden Seite auf dem Boden abgelegt, so dass die Fahrfüße 5, 5' in Fig. 1 rechts mit den Rollen 6, 6' auf dem Boden zu liegen kommen und die oberen Enden der Seitenteile 2, 8 links auf einem Stützpodest ruhen. Die Traverse 9 wird dann in den Zeichnungen von links mit dem Hubgabelstapler 1 an die oberen Enden der Seitenteile 2, 8 herangefahren und über die Gelenkverbindung mit diesen verbunden. Nach geringfügigem Anheben der Traverse 9 mit der Hubgabel 13 wird dann das Stützpodest entfernt und anschließend die Traverse 9 bis in die Endposition angehoben. Wie oben beschrieben, drehen sich die Seitenteile 2, 8 hierdurch in ihre aufrechte Endposition. Vorteil dieser Ausführung ist, dass anstelle der Rollen an der Kippkante 15 die ohnehin vorhandenen Rollen 6 der Fahrfüße 5, 5' verwendet werden können. Zudem können die Rollen 6 bereits auf die Schienen der Schienenanordnung aufgestellt werden, wodurch die Seitenteile 2, 8 beim Aufrichten des Waschportals in die Endposition geführt werden.

Soll die Traverse 9 anstatt auf der in Fig. 7 gezeigten linken Seite auf der rechten Seite der Seitenteile 2, 8 angeordnet werden, so wird die Traverse 9 in Fig. 1 rechts von den Seitenteilen 2, 8 am Boden 3 abgelegt. Dort wird die Gelenkverbindung an der Oberseite der Traverse 9 und den oberen Enden der Seitenteile 2, 8 hergestellt, wie bei der obigen alternativen Ausführung beschrieben. Angehoben wird die Traverse 9 dann durch den Hubgabelstapler 1 von rechts, wobei das Anheben grundsätzlich wie bei der zeichnerisch dargestellten Ausführung erfolgt.

## Patentansprüche

1. Waschportal für Fahrzeugwaschanlagen, mit einer Traverse (9) und zwei im fertig montierten Zustand des Waschportals fest mit der Traverse (9) verbundenen Seitenteilen (2, 8), **dadurch gekennzeichnet, dass** die Traverse (9) und die Seitenteile (2, 8) zur Montage des Waschportals über mindestens eine Gelenkverbindung (11, 12) mit einer im wesentlichen senkrecht zu den Seitenteilen (2, 8) und längs der Traverse (9) verlaufenden Drehachse drehbar miteinander verbunden sind.

2. Waschportal nach Anspruch 1, **dadurch gekennzeichnet, dass** die Gelenkverbindung (11, 12) Drehzapfen und entsprechende Zapfenaufnahmen aufweist.

3. Waschportal nach Anspruch 1, **dadurch gekennzeichnet, dass** die Gelenkverbindung in Form eines Scharniers (11, 12) ausgebildet ist.

4. Waschportal nach einem der vorhergehenden Ansprüche, **dadurch gekennzeichnet, dass** die Gelenkverbindung (11, 12) an einem im Betriebszustand oberen Ende der Seitenteile (2, 8) und an äußeren Enden der Traverse (9) angeordnet ist.

5. Waschportal nach einem der vorhergehenden Ansprüche, **dadurch gekennzeichnet, dass** an der Traverse (9) und den Seitenteilen (2, 8) mindestens eine Arretiervorrichtung, insbesondere ein Schnellverschluss, vorgesehen ist, um die Traverse (9) fest mit den Seitenteilen (2, 8) verbinden zu können.

6. Waschportal nach einem der vorhergehenden Ansprüche, **dadurch gekennzeichnet, dass** an der Traverse (9) und den Seitenteilen (2, 8) in einander in Eingriff bringbare Ausrichtelemente vorgesehen sind

7. Waschportal nach einem der vorhergehenden Ansprüche, **dadurch gekennzeichnet, dass** an Fahrfüßen (5) der Seitenteile (2, 8) Rollmittel zum Aufrichten der Seitenteile (2, 8) während der Montage vorgesehen sind.

8. Verfahren zur Montage eines Waschportals, mit einer Traverse (9) und zwei im fertig montierten Zustand des Waschportals fest mit der Traverse (9) verbundenen Seitenteilen (2, 8), **gekennzeichnet durch** die folgenden Schritte:
a) Positionieren der Seitenteile (2, 8) und der Traverse (9) zueinander in einer Montageposition (Fig. 1 bis 4),
b) Herstellen mindestens einer Gelenkverbindung (11, 12) zwischen der Traverse (9) und den Seitenteilen (2, 8), so dass die Seitenteile (2, 8) relativ zur Traverse (9) gedreht werden können,
c) Bewegen der Traverse (9) von der Montageposition (Fig. 1 bis 4) in eine Endposition (Fig. 7), wobei die Seitenteile (2, 8) von der Montageposition (Fig. 1 bis 4) um eine im wesentlichen senkrecht zu den Seitenteilen (2, 8) und längs der Traverse (9) verlaufende Drehachse der Gelenkverbindung in die Endposition (Fig. 7) bewegt werden,
d) festes Verbinden der Traverse (9) mit den Seitenteilen (2, 8), so dass keine Drehung der Seitenteile (2, 8) relativ zur Traverse (9) mehr möglich ist.

9. Verfahren nach Anspruch 8, **dadurch gekennzeichnet, dass** in der Montageposition (Fig. 1 bis 4) die Seitenteile (2, 8) parallel zueinander positioniert werden und die Traverse (9) senkrecht zu den Seitenteilen (2, 8) und diese übergreifend positioniert wird, wobei die Drehachse der Gelenkverbindung (11, 12) im wesentlichen senkrecht zu den Seitenteile (2, 8) und längs der Traverse (9) verläuft.

10. Verfahren nach Anspruch 8 oder 9, **dadurch gekennzeichnet, dass** die Seitenteile (2, 8) in der Montageposition (Fig. 1 bis 4) auf dem Boden (3) liegen.

11. Verfahren nach einem der Ansprüche 8 bis 10, **dadurch gekennzeichnet, dass** die Seitenteile (2, 8) in der Endposition (Fig. 7) im wesentlichen aufrecht stehen.

12. Verfahren nach einem der Ansprüche 8 bis 11, **dadurch gekennzeichnet, dass** die Traverse (9) während des Schrittes c) nicht gedreht wird.

13. Verfahren nach einem der Ansprüche 8 bis 12, **dadurch gekennzeichnet, dass** die Seitenteile (2, 8) während des Schrittes c) um mit Rollmitteln versehene Fahrfüße (5) gedreht werden.

## Claims

1. Rollover wash unit for vehicle washing systems with a cross-beam (9) and two side parts (2, 8) rigidly connected to the cross-beam (9) in the completely assembled state of the rollover wash unit, **characterised in that** the cross-beam (9) and the side parts (2, 8) are rotatably connected to one another to assemble the rollover wash unit by means of at least one articulated connection (11, 12) to a rotary axle extending substantially perpendicular to the side parts (2, 8) and along the cross-beam (9).

2. Rollover wash unit according to claim 1, **characterised in that** the articulated connection (11, 12) has hinge pins and corresponding pin receptacles.

3. Rollover wash unit according to claim 1, **characterised in that** the articulated connection is configured in the form of a hinge (11, 12).

4. Rollover wash unit according to any one of the preceding claims, **characterised in that** the articulated connection (11, 12) is arranged on an upper end in the operating state, of the side parts (2, 8) and on outer ends of the cross-beam (9).

5. Rollover wash unit according to any one of the preceding claims, **characterised in that** at least one locking device, in particular a quick-release closure, is provided on the cross-beam (9) and the side parts (2, 8), in order to be able to rigidly connect the cross-beam (9) to the side parts (2, 8).

6. Rollover wash unit according to any one of the preceding claims, **characterised in that** orienting elements, which can be brought into engagement with one another, are provided on the cross-beam (9) and the side parts (2, 8).

7. Rollover wash unit according to any one of the preceding claims, **characterised in that** rolling means for erecting the side parts (2, 8) during assembly are provided on travelling feet (5) of the side parts (2, 8).

8. Method for assembling a rollover wash unit, with a cross-beam (9) and two side parts (2, 8) rigidly connected to the cross-beam (9) in the completely assembled state of the rollover wash unit, **characterised by** the following steps:
a) positioning the side parts (2, 8) and the cross-beam (9) with respect to one another in an assembly position (Fig. 1 to 4),
b) producing at least one articulated connection (11, 12) between the cross-beam (9) and the side parts (2, 8), so that the side parts (2, 8) can be rotated relative to the cross-beam (9),
c) moving the cross-beam (9) from the assembly position (Fig. 1 to 4) into an end position (Fig. 7), the side parts (2, 8) being moved from the assembly position (Fig. 1 to 4) about a rotary axle, which extends substantially perpendicular to the side parts (2, 8) and along the cross-beam (9), of the articulated connection into the end position (Fig. 7),
d) rigidly connecting the cross-beam (9) to the side parts (2, 8), so no further rotation of the side parts (2, 8) relative to the cross-beam (9) is possible.

9. Method according to claim 8, **characterised in that** the side parts (2, 8) are positioned parallel to one another in the assembly position (Fig. 1 to 4) and the cross-beam (9) is positioned perpendicular to the side parts (2, 8) and overlapping the latter, the rotary axle of the articulated connection (11, 12) substantially extending perpendicular to the side parts (2, 8) and along the cross-beam (9).

10. Method according to claim 8 or 9, **characterised in that** the side parts (2, 8) in the assembly position (Fig. 1 to 4) are located on the base (3).

11. Method according to any one of claims 8 to 10, **characterised in that** the side parts (2, 8) are substantially upright in the end position (Fig. 7).

12. Method according to any one of claims 8 to 11, **characterised in that** the cross-beam (9) is not rotated during step c).

13. Method according to any one of claims 8 to 12, **characterised in that** the side parts (2, 8) are rotated during step c) around travelling feet (5) provided with rolling means.

## Revendications

1. Portique de lavage pour des stations de lavage de véhicule, comportant une traverse (9) et deux parties latérales (2, 8) reliées fixement à la traverse (9) à l'état prémonté du portique de lavage, **caractérisé en ce que** la traverse (9) et les parties latérales (2, 8) sont reliées entre elles de manière rotative pour le montage du portique de lavage par au moins une liaison articulée (11, 12) dotée d'un axe de rotation s'étendant sensiblement perpendiculairement aux parties latérales (2, 8) et le long de la traverse (9).

2. Portique de lavage selon la revendication 1, **caractérisé en ce que** la liaison articulée (11, 12) présente des tourillons et des logements pour tourillons correspondants.

3. Portique de lavage selon la revendication 1, **caractérisé en ce que** la liaison articulée est réalisée sous la forme d'une charnière (11, 12).

4. Portique de lavage selon l'une quelconque des revendications précédentes, **caractérisé en ce que** la liaison articulée (11, 12) est disposée sur une extrémité supérieure à l'état de fonctionnement des parties latérales (2, 8) et sur des extrémités extérieures de la traverse (9).

5. Portique de lavage selon l'une quelconque des revendications précédentes, **caractérisé en ce qu'**au moins un dispositif d'arrêt, en particulier une fermeture rapide, est prévu sur la traverse (9) et les parties latérales (2, 8) afin de pouvoir relier fixement la traverse (9) aux parties latérales (2, 8).

6. Portique de lavage selon l'une quelconque des revendications précédentes, **caractérisé en ce que** des éléments d'orientation pouvant être amenés en engagement les uns dans les autres sont prévus sur la traverse (9) et les parties latérales (2, 8).

7. Portique de lavage selon l'une quelconque des revendications précédentes, **caractérisé en ce que** des moyens de roulement sont prévus pour le redressage des parties latérales (2, 8) pendant le montage sur des pieds roulants (5) des parties latérales (2, 8).

8. Procédé de montage d'un portique de lavage, comportant une traverse (9) et deux parties latérales (2, 8) reliées fixement à la traverse (9) à l'état prémonté du portique de lavage, **caractérisé par** les étapes suivantes :
a) positionnement des parties latérales (2, 8) et de la traverse (9) les uns par rapport aux autres dans une position de montage (figures 1 à 4),
b) établissement d'au moins une liaison articulée (11, 12) entre la traverse (9) et les parties latérales (2, 8) de sorte que les parties latérales (2, 8) puissent être tournées par rapport à la traverse (9),
c) déplacement de la traverse (9) de la position de montage (figures 1 à 4) à une position finale (figure 7), sachant que les parties latérales (2, 8) sont déplacées de la position de montage (figures 1 à 4) à la position finale (figure 7) autour d'un axe de rotation de la liaison articulée s'étendant sensiblement perpendiculairement aux parties latérales (2, 8) et le long de la traverse (9),
d) liaison fixe de la traverse (9) avec les parties latérales (2, 8) de sorte qu'aucune rotation des parties latérales (2, 8) par rapport à la traverse (9) ne soit possible.

9. Procédé selon la revendication 8, **caractérisé en ce que** dans la position de montage (figures 1 à 4), les parties latérales (2, 8) sont positionnées parallèlement l'une à l'autre et **en ce que** la traverse (9) est positionnée perpendiculairement aux parties latérales (2, 8) et de manière à les recouvrir, sachant que l'axe de rotation de la liaison articulée (11, 12) s'étend sensiblement perpendiculairement aux parties latérales (2, 8) et le long de la traverse (9).

10. Procédé selon la revendication 8 ou 9, **caractérisé en ce que** les parties latérales (2, 8) dans la position de montage (figures 1 à 4) se situent sur le sol (3).

11. Procédé selon l'une quelconque des revendications 8 à 10, **caractérisé en ce que** les parties latérales (2, 8) dans la position finale (figure 7) sont essentiellement verticales.

12. Procédé selon l'une quelconque des revendications 8 à 11, **caractérisé en ce que** la traverse (9) n'est pas pivotée pendant l'étape c).

13. Procédé selon l'une quelconque des revendications 8 à 12, **caractérisé en ce que** les parties latérales (2, 8) sont pivotées pendant l'étape c) autour des pieds roulants (5) pourvus de moyens de roulement.
